# EUROPEAN PATENT APPLICATION

(11) **EP 3 979 356 A1**
(43) Date of publication of application: **06.04.2022**
(21) Application number: 20818711.2
(22) Date of filing: 07.05.2020
(51) Int. Cl.: H01M 2/26, H01M 10/0587, H01M 10/04, H01M 4/66, H01M 2/30, H01M 2/02

(54) **SECONDARY BATTERY**

(30) Priority: 03.06.2019 KR 20190065382
(71) Applicant: Samsung SDI Co., Ltd., Yongin-si, Gyeonggi-do 17084 (KR)
(72) Inventor: BYUN, In Seop, Yongin-si, Gyeonggi-do 17084 (KR); KIM, Cheon Soo, Yongin-si, Gyeonggi-do 17084 (KR); LEE, Jin Uk, Yongin-si, Gyeonggi-do 17084 (KR); LEE, Chong Hoon, Yongin-si, Gyeonggi-do 17084 (KR); KO, Young Dae, Yongin-si, Gyeonggi-do 17084 (KR)
(74) Representative: Shearman, James Ward
(86) International application number: PCT/KR2020/006025
(87) International publication number: WO 2020/246716

(57) **Abstract**

An embodiment of the present invention relates to a secondary battery, and the object of the present invention is to provide a secondary battery capable of improving the flatness of an electrode assembly and reducing internal resistance when the electrode assembly is rolled. To this end, disclosed is a secondary battery comprising: an electrode assembly rolled including a positive electrode plate, a negative electrode plate, and a separator, wherein the positive electrode plate has positive electrode uncoated portions provided at a rolled central portion thereof and a rolled end portion thereof, and the negative electrode plate has negative electrode uncoated portions provided at a rolled central portion thereof and a rolled end portion thereof; a first positive electrode foil tab and a second positive electrode foil tab respectively connected to the positive electrode uncoated portions; a first negative electrode foil tab and a second negative electrode foil tab respectively connected to the negative electrode uncoated portions; a positive electrode current collection tab connected together to the first positive electrode foil tab and the second positive electrode foil tab; a negative electrode current collection tab connected together to the first negative electrode foil tab and the second negative electrode foil tab; and a pouch-type case for accommodating the electrode assembly.

## Description

### TECHNICAL FIELD

Embodiments of the present invention relate to a secondary battery.

### BACKGROUND ART

Unlike a primary battery that cannot be charged, a secondary battery can be charged and discharged. Low-capacity secondary batteries are mainly used for portable small electronic devices such as smartphones, laptops, digital cameras, and camcorders, and large-capacity secondary batteries are widely being used for motor driving and power storage in hybrid and electric vehicles.

Such a secondary battery includes an electrode assembly, a terminal drawn out from the electrode assembly, and a case for accommodating the electrode assembly and an electrolyte. The electrode assembly, including a positive electrode plate, a negative electrode plate, and a separator, may be stacked on each other or rolled together (in a jelly-roll type). In addition, the case may be classified into cylindrical, prismatic, and pouch types according to case appearance.

The above information disclosed in this Background section is only for enhancement of understanding of the background of the invention and therefore it may contain information that does not constitute prior art.

### DETAILED DESCRIPTION OF THE INVENTION

### TECHNICAL PROBLEM

An embodiment of the present invention provides a secondary battery capable of improving the flatness of an electrode assembly and reducing internal resistance when the electrode assembly is rolled.

### SOLUTION TO THE PROBLEM

A secondary battery according to an embodiment of the present invention comprises: an electrode assembly rolled including a positive electrode plate, a negative electrode plate, and a separator, wherein the positive electrode plate has positive electrode uncoated portions provided at a rolled central portion thereof and a rolled end portion thereof, and the negative electrode plate has negative electrode uncoated portions provided at a rolled central portion thereof and a rolled end portion thereof; a first positive electrode foil tab and a second positive electrode foil tab respectively connected to the positive electrode uncoated portions; a first negative electrode foil tab and a second negative electrode foil tab respectively connected to the negative electrode uncoated portions; a positive electrode current collection tab connected together to the first positive electrode foil tab and the second positive electrode foil tab; a negative electrode current collection tab connected together to the first negative electrode foil tab and the second negative electrode foil tab; and a pouch-type case for accommodating the electrode assembly.

In addition, the first positive electrode foil tab and the second positive electrode foil tab may have a thickness smaller than a region of the positive electrode plate to which the positive electrode active material is applied, and the first negative electrode foil tab and the second negative electrode foil tab may have a thickness smaller than a region of the negative electrode plate to which the negative electrode active material is applied.

In addition, the first positive electrode foil tab and the second positive electrode foil tab may have a thickness of 25 to 35 [µm], and the region of the positive electrode plate to which the positive electrode active material is applied may have a thickness of 90 to 110 [µm].

In addition, the positive electrode current collection tab may have a thickness of 80 to 100 [µm]

In addition, the first negative electrode foil tab and the second negative electrode foil tab may have a thickness of 25 to 35 [µm], and the region of the negative electrode plate to which the negative electrode active material is applied may have a thickness of 100 to 130 [µm].

In addition, the negative electrode current collection tab may have a thickness of 80 to 100 [µm].

### EFFECT OF THE INVENTION

In the secondary battery according to an embodiment of the present invention, the positive electrode foil tab and the negative electrode foil tab have a very small thickness compared to the positive electrode plate and the negative electrode plate as a whole, and thus the positive electrode foil tab and the negative electrode foil tab may not protrude more outwardly than the region of the positive electrode plate to which the positive electrode active material is applied and the region of the negative electrode plate to which the negative electrode active material is applied, when coupled to the positive electrode uncoated portion and the negative electrode uncoated portion, thereby improving the flatness when the electrode assembly is rolled, and increasing the energy density and reducing the internal resistance.

### BRIEF DESCRIPTION OF DRAWINGS

FIG. 1 is a perspective view of a secondary battery according to an embodiment of the present invention.
FIG. 2A is a plan view of a positive electrode plate of a secondary battery according to an embodiment of the present invention.
FIG. 2B is a cross-sectional view taken along line X-X of FIG. 2A.
FIGS. 3A to 3E are views sequentially illustrating a process of connecting a positive electrode current collection tab to positive electrode foil tabs of a secondary battery according to an embodiment of the present invention.

### MODE FOR IMPLEMENTING THE INVENTION

Hereinafter, example embodiments of the present invention will be described in detail.

Embodiments of the present invention are provided to more completely explain the present invention to one skilled in the art, and the following example embodiments may be modified in various other forms and the present invention should not be construed as being limited to the embodiments set forth herein. Rather, these example embodiments are provided so that this disclosure will be thorough and complete and will convey the aspects and features of the present invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or and/or "comprising" when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

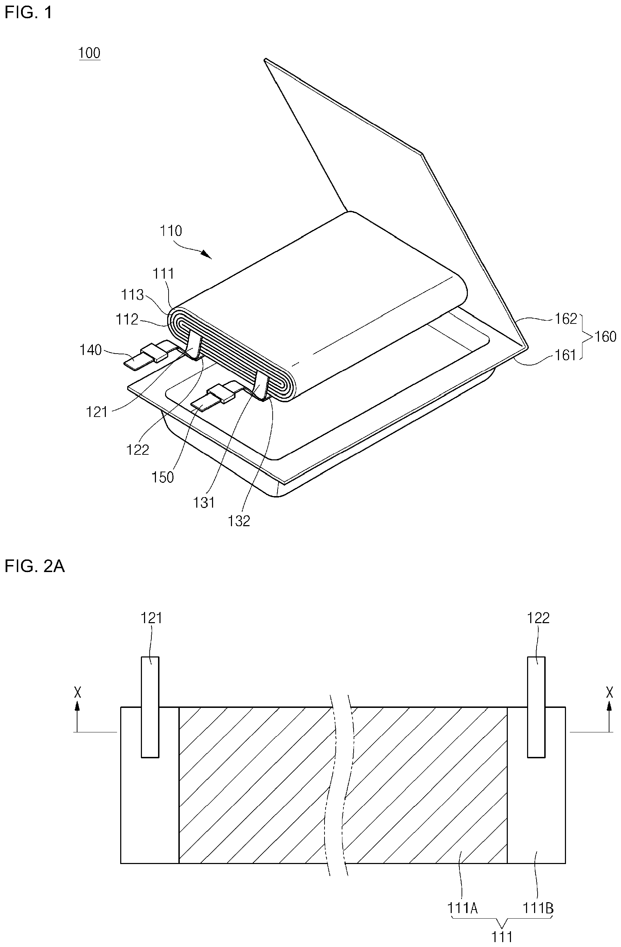

FIG. 1 is a perspective view of a secondary battery 100 according to an embodiment of the present invention.

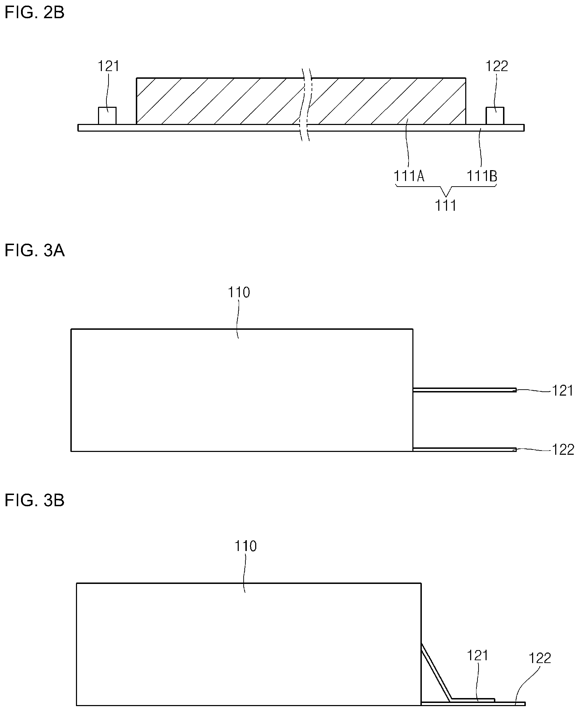

In addition, FIG. 2A is a plan view of a positive electrode plate 111 of a secondary battery 100 according to an embodiment of the present invention, and FIG. 2B is a cross-sectional view taken along line X-X of FIG. 2A.

Referring to FIG. 1, the secondary battery 100 includes an electrode assembly 110, positive electrode foil tabs 121 and 122, negative electrode foil tabs 131 and 132, a positive electrode current collection tab 140, a negative electrode current collection tab 150, and a pouch-type case 160.

The electrode assembly 110 includes a positive electrode plate 111, a negative electrode plate 112, and a separator 113.

The positive electrode plate 111 includes a positive electrode current collector which is made of, for example, aluminum foil, and a positive electrode active material 111A which is made of, for example, a transition metal oxide, and is applied to the positive electrode current collector. Here, as shown in FIGS. 2A and 2B, the positive electrode plate 111 includes positive electrode uncoated portions 111B, which are regions to which the positive electrode active material 111A is not applied, at both left and right ends thereof. Here, the positive electrode current collector itself may have a thickness of about 10 to 12 [µm], and the region to which the positive electrode active material 111A is applied may have a thickness of about 100 [µm], for example, about 90 to 110 [µm].

The negative electrode plate 112 includes a negative electrode current collector which is made of, for example, copper or nickel foil, and a negative electrode active material which is made of, for example, graphite or carbon, and is applied to the negative electrode current collector. Here, the negative electrode plate 112 also includes negative electrode uncoated portions, which are regions to which the negative electrode active material is not applied, at both left and right ends thereof. Here, the negative electrode current collector itself may have a thickness of about 8 to 10 [µm], and the region to which the negative electrode active material is applied may have a thickness of about 100 to 130 [µm].

The separator 113 is made of, for example, polyethylene, polypropylene or a composite film of polyethylene and polypropylene. In addition, the separator 113, which is interposed between the positive electrode plate 111 and the negative electrode plate 112, prevents a short circuit between the positive electrode plate 111 and the negative electrode plate 112 while allowing the movement of, for example, lithium ions.

The electrode assembly 110 is rolled in a so-called jelly-roll configuration on the basis of one end thereof. Hereinafter, the one end is referred to as a "rolled central portion" and the other end is referred to as a "rolled end portion".

The positive electrode foil tabs 121 and 122, as shown in FIG. 2A, are respectively electrically connected to the two negative electrode uncoated portions 111B of the positive electrode plate 111 to then be exposed beyond the top ends thereof.

In addition, the positive electrode foil tabs 121 and 122 may be made of the same material as the positive electrode current collector. For example, if the positive electrode current collector is made of aluminum, the positive electrode foil tabs 121 and 122 may also be made of aluminum.

In addition, the positive electrode foil tabs 121 and 122 may have a very small thickness compared to the positive electrode plate 111 as a whole. For example, the positive electrode foil tabs 121 and 122 may have a thickness of about 1/3 of an area of the positive electrode plate 111 coated with the positive electrode active material 111A. More specifically, the positive electrode foil tabs 121 and 122 may have a thickness of about 25 to 35 [µm].

Hereinafter, in the positive electrode plate 111, the positive electrode foil tab 121 connected to the negative electrode uncoated portion 111B on a side of the rolled central portion is referred to as a "first positive electrode foil tab 121", and the positive electrode foil tab 122 connected to the negative electrode uncoated portion 111B on a side of the rolled end portion is referred to as a "second positive electrode foil tab 122".

The first positive electrode foil tab 121 and the second positive electrode foil tab 122 are arranged so as to be substantially parallel to each other when the electrode assembly 110 is rolled.

The negative electrode foil tabs 131 and 132 are respectively electrically connected to the two uncoated portions of the negative electrode plate 112 to then be exposed beyond the top ends thereof.

In addition, the negative electrode foil tabs 131 and 132 may be made of the same material as the negative electrode current collector. For example, if the negative electrode current collector is made of copper, the negative electrode foil tabs 131 and 132 may also be made of copper.

In addition, the negative electrode foil tabs 131 and 132 may have a very thickness compared to the negative electrode plate 112 as a whole. For example, the negative electrode foil tabs 131 and 132 may have a thickness of about 1/4 of the area of the negative electrode plate 112 coated with the negative electrode active material. More specifically, the negative electrode foil tabs 131 and 132 may have a thickness of about 25 to 35 [µm].

Hereinafter, in the negative electrode plate 112, the negative electrode foil tab 131 connected to the negative electrode uncoated portion on a side of the rolled central portion is referred to as a "first negative electrode foil tab 131", and the negative electrode foil tab 132 connected to the negative electrode uncoated portion on a side of the rolled end portion is referred to as a "second negative electrode foil tab 132".

The first negative electrode foil tab 131 and the second negative electrode foil tab 132 are arranged so to be aligned substantially parallel to each other when the electrode assembly 110 is rolled.

The positive electrode current collection tab 140 is connected together to the first positive electrode foil tab 121 and the second positive electrode foil tab 122.

In this regard, FIGS. 3A to 3E are views sequentially illustrating a process of connecting a positive electrode current collection tab 140 to positive electrode foil tabs 121 and 122 of a secondary battery 100 according to an embodiment of the present invention, which are viewed from a side surface when the electrode assembly 110 is rolled.

First, when the electrode assembly 110 is rolled as shown in FIG. 3A, the first positive electrode foil tab 121 is bent toward the second positive electrode foil tab 122 to overlap each other as shown in FIG. 3B. Of course, when necessary, the second positive electrode foil tabs 122 may also be bent toward the first positive electrode foil tabs 121 to overlap each other, and the first positive electrode foil tabs 121 and the second positive electrode foil tabs 122 may be bent together to overlap each other.

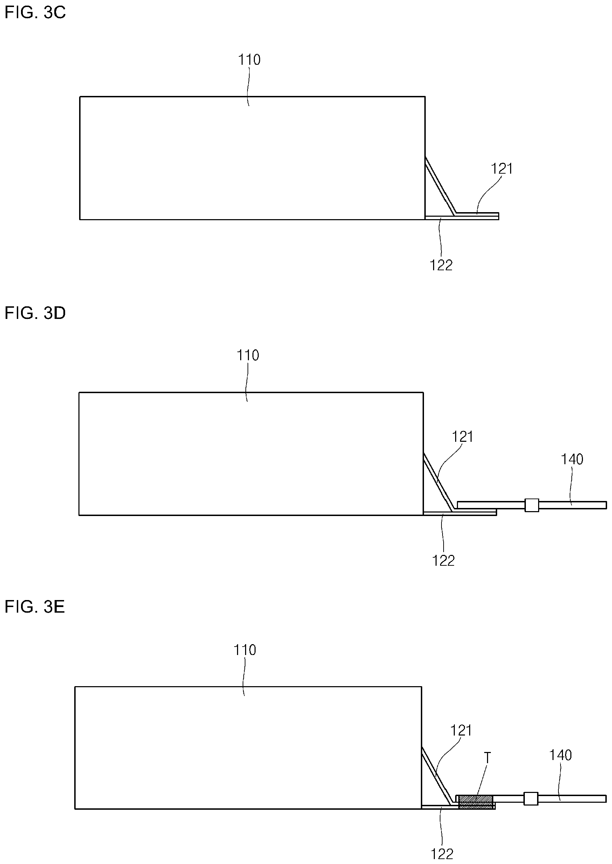

Thereafter, as shown in FIG. 3C, the ends of the first positive electrode foil tab 121 and the second positive electrode foil tab 122 are cut to an appropriate length to then be aligned.

Next, as shown in FIG. 3D, the positive electrode current collection tab 140 is welded together to the first positive electrode foil tab 121 and the second positive electrode foil tab 122.

Lastly, as shown in FIG. 3E, an insulating tape (T) is attached and finished.

Meanwhile, the positive electrode current collection tab 140 may have a thickness of about 80 to 100 [µm].

The negative electrode current collection tab 150 is also connected together to the first negative electrode foil tab 131 and the second negative electrode foil tab 132.

In FIGS. 3A to 3E, the first negative electrode foil tab 131, the second negative electrode foil tab 132, and the negative electrode current collection tab 150 are hidden behind the first positive electrode foil tab 121, the second positive electrode foil tab 122 and the positive electrode current collection tab 140 and are not seen, but the same process as described above can be performed thereon.

That is, while the electrode assembly 110 is rolled, the first negative electrode foil tab (131) and the second negative electrode foil tab (132) are overlapped with each other, the ends of the first negative electrode foil tab 131 and the second negative electrode foil tab 132 are then cut to an appropriate length and aligned, the negative electrode current collection tab 150 is then welded together to the first negative electrode foil tab 131 and the second negative electrode foil tab 132, followed by finishing by attaching the insulation tape (T).

Here, the negative electrode current collection tab 150 may have a thickness of about 80 to 100 [µm].

The case 160 includes a lower case 161 that has a concave space to accommodate the electrode assembly 110 and an electrolyte, and an upper case 162 that is coupled to the lower case 161 and seals same.

Here, the electrolyte may include, for example, an organic solvent such as ethylene carbonate (EC), propylene carbonate (PC), diethyl carbonate (DEC), dimethyl carbonate (DMC), ethyl methyl carbonate (EMC), and a lithium salt such as LiPF₆ or LibF₄.

According to the above-described secondary battery 100, the positive electrode foil tabs 121 and 122 and the negative electrode foil tabs 131 and 132 have a very small thickness compared to the positive electrode plate 111 and the negative electrode plate 112 as a whole, and thus the positive electrode foil tabs 121 and 122 and the negative electrode foil tabs 131 and 132 may not protrude more outwardly than the region of the positive electrode plate 111 to which the positive electrode active material 111A is applied and the region of the negative electrode plate 112 to which the negative electrode active material is applied, when coupled to the positive electrode uncoated portion 111B and the negative electrode uncoated portion, thereby improving the flatness when the electrode assembly 110 is rolled.

Additionally, according to the secondary battery 100, the energy density can be increased and the internal resistance of a cell can be reduced.

In this regard, Table 1 shows DCIR (Direct Current Internal Resistance) measurements when a current is applied to a secondary battery for 1 second, and Table 2 shows DCIR measurements when a current is applied to a secondary battery for 30 seconds.

As used herein, the term "Conventional secondary battery" refers to a secondary battery including an electrode assembly in which a positive electrode plate and a negative electrode plate have a positive electrode uncoated portion and a negative electrode uncoated portion each provided at one end, and a positive electrode material tab and a negative electrode material tab of about 80 [µm] are respectively connected to the positive electrode uncoated portion and the negative electrode uncoated.

**[Table 1]**

| Temp. | DOD | Conventional secondary battery | Secondary battery according to an embodiment of the present invention | Internal resistance reduction rate |
|---|---|---|---|---|
| 35°C | 30% | 42mΩ | 23mΩ | 46% |
| | 80% | 43mΩ | 23mΩ | 47% |
| | 90% | 44mΩ | 24mΩ | 47% |
| 25°C | 30% | 49mΩ | 28mΩ | 42% |
| | 80% | 51mΩ | 31mΩ | 40% |
| | 90% | 53mΩ | 32mΩ | 40% |
| 10°C | 30% | 82mΩ | 52mΩ | 36% |
| | 70% | 96mΩ | 59mΩ | 39% |
| | 80% | 105mΩ | 62mΩ | 41% |
| Avg. | | | | 42% |

**[Table 2]**

| Temp. | DOD | Conventional secondary battery | Secondary battery according to an embodiment of the present invention | Internal resistance reduction rate |
|---|---|---|---|---|
| 35°C | 30% | 58mΩ | 34mΩ | 41% |
| | 80% | 59mΩ | 32mΩ | 46% |
| | 90% | 64mΩ | 35mΩ | 46% |
| 25°C | 30% | 65mΩ | 42mΩ | 36% |
| | 80% | 69mΩ | 43mΩ | 37% |
| | 90% | 80mΩ | 53mΩ | 34% |
| 10°C | 30% | 105mΩ | 75mΩ | 28% |
| | 70% | 129mΩ | 94mΩ | 27% |
| | 80% | 152mΩ | 115mΩ | 24% |
| Avg. | | | | 36% |

Referring to Tables 1 and 2, it can be confirmed that the internal resistance of the secondary battery 100 according to the embodiment of the present invention is reduced by about 36 to 42 [%] compared to the conventional secondary battery.

While the foregoing embodiment has been described to practice the secondary battery 100 according to the present invention, it will be understood by those of ordinary skill in the art that various changes in form and details may be made therein without departing from the spirit and scope of the present invention as defined by the following claims.

## Claims

1. A secondary battery comprising:
an electrode assembly rolled including a positive electrode plate, a negative electrode plate, and a separator, wherein the positive electrode plate has positive electrode uncoated portions provided at a rolled central portion thereof and a rolled end portion thereof, and the negative electrode plate has negative electrode uncoated portions provided at a rolled central portion thereof and a rolled end portion thereof;
a first positive electrode foil tab and a second positive electrode foil tab respectively connected to the positive electrode uncoated portions;
a first negative electrode foil tab and a second negative electrode foil tab respectively connected to the negative electrode uncoated portions;
a positive electrode current collection tab connected together to the first positive electrode foil tab and the second positive electrode foil tab;
a negative electrode current collection tab connected together to the first negative electrode foil tab and the second negative electrode foil tab; and
a pouch-type case for accommodating the electrode assembly.

2. The secondary battery of claim 1, wherein the first positive electrode foil tab and the second positive electrode foil tab have a thickness smaller than a region of the positive electrode plate to which the positive electrode active material is applied.

3. The secondary battery of claim 1, wherein the first negative electrode foil tab and the second negative electrode foil tab have a thickness smaller than a region of the negative electrode plate to which the negative electrode active material is applied.

4. The secondary battery of claim 1, wherein the first positive electrode foil tab and the second positive electrode foil tab have a thickness of 25 to 35 [µm].

5. The secondary battery of claim 1, wherein the region of the positive electrode plate to which the positive electrode active material is applied has a thickness of 90 to 110 [µm].

6. The secondary battery of claim 1, wherein the positive electrode current collection tab has a thickness of 80 to 100 [µm]

7. The secondary battery of claim 1, wherein the first negative electrode foil tab and the second negative electrode foil tab have a thickness of 25 to 35 [µm].

8. The secondary battery of claim 1, wherein the region of the negative electrode plate to which the negative electrode active material is applied has a thickness of 100 to 130 [µm].

9. The secondary battery of claim 1, wherein the negative electrode current collection tab has a thickness of 80 to 100 [µm].
